# EUROPÄISCHE PATENTSCHRIFT

(11) **EP 2 510 777 B1**
(45) Veröffentlichungstag und Bekanntmachung des Hinweises auf die Patenterteilung: **16.03.2016**
(21) Anmeldenummer: 12160486.2
(22) Anmeldetag: 21.03.2012
(51) Int. Cl.: A01F 12/44

(54) **Verfahren zur Einstellung einer Reinigungseinrichtung eines Mähdreschers und Reinigungseinrichtung**
Method for adjusting a cleaning device of a combine harvester and cleaning device
Procédé de réglage d'une installation de nettoyage d'une moissonneuse-batteuse et installation de nettoyage

(30) Priorität: 15.04.2011 DE 102011007511
(43) Veröffentlichungstag der Anmeldung: 17.10.2012
(73) Patentinhaber: Deere & Company, Moline, IL 61265 (US)
(72) Erfinder: Bischoff, Lutz, 66989 Nünschweiler (DE)
(74) Vertreter: Holst, Sönke

(56) Entgegenhaltungen:
- EP-A1- 1 543 712
- DE-A1- 19 705 841
- US-A1- 2010 113 113
- US-B1- 6 761 630

## Beschreibung

Die Erfindung betrifft ein Verfahren zur Einstellung einer Reinigungseinrichtung eines Mähdreschers und eine entsprechende Reinigungseinrichtung.

### Stand der Technik

Mähdrescher werden in der Landwirtschaft verwendet, um stängelartige Pflanzen von einem Feld zu ernten und Fruchtstände (z. B. Korn) von den Erntegutresten zu trennen. Dabei werden die Pflanzen durch eine Dresch- und Trenneinrichtung geführt und in einer Reinigungseinrichtung werden unerwünschte Emtegutreste (Spreu, Kurzstroh) von den Fruchtständen der Pflanzen separiert, welche schließlich in einem Korntank zwischengespeichert werden, bevor sie auf ein Transportfahrzeug überladen werden. Die Reinigungseinrichtung umfasst ein Gebläse, das in einer Schüttelbewegung befindliche Siebe von unten her mit einem Luftstrom beaufschlagt, um die leichteren Erntegutreste nach hinten auszublasen, während die Fruchtstände der Pflanze durch Öffnungen der Siebe nach unten fallen und durch einen quer angeordneten Schneckenförderer und einen Körnerelevator in den Komtank verbracht werden.

Die Drehzahl des Gebläses und somit die Flussdichte des die Siebe durchströmenden Windes und die Größe der Sieböffnung sind üblicherweise verstellbar, um die Reinigungseinrichtung an die jeweilige Erntegutart (z. B. die Größe des Koms), andere Emteguteigenschaften, wie die Feuchtigkeit des Ernteguts, und den jeweiligen Durchsatz anzupassen. Ein weiterer zu berücksichtigender Gesichtspunkt bei der Einstellung der Reinigungseinrichtung ist eine eventuelle Neigung des Mähdreschers und somit der darin aufgehängten Reinigungseinrichtung gegenüber der Horizontalen in der Vorwärtsrichtung.

Beim Bergauffahren bewegt sich das Erntegut schneller über die Siebe nach hinten als in der Horizontalen, was sowohl für ein Obersieb zur Vorreinigung des Ernteguts als auch für ein Untersieb zur endgültigen Reinigung des Ernteguts zutrifft. Dadurch steigen die Verluste am Ende des Obersiebs stark an und gleichzeitig gelangt mehr sauberes Korn am Ende des Untersiebs in einen Überkehrförderer, der es in eine Nachdrescheinrichtung oder zurück zur Drescheinrichtung fördert, wodurch das Risiko einer vermehrten Kornbeschädigung (Bruchkorn) vergrößert wird.

Hingegen bewegt sich das Erntegut beim Bergabfahren langsamer über die Siebe als bei einem horizontal ausgerichteten Mähdrescher und staut sich auf. Dadurch wird der Luftstrom des Gebläses gedrosselt und die Luftgeschwindigkeit bzw. Intensität des Luftstroms ist nicht mehr ausreichend für einen optimalen Reinigungsprozess. Die Reinigungsverluste steigen dadurch stark an. Außerdem wird die Materialmenge in der Überkehr ansteigen, da nicht genügend Kaff ausgeblasen wird. Da die Siebe schräg nach hinten und oben ansteigende Lamellen aufweisen, zwischen denen sich die Sieböffnung bildet, ist die genau horizontale Komponente der Sieböffnung (d. h. die in die Horizontale projizierte Fläche der Sieböffnungen) größer als bei einem horizontal ausgerichteten Mähdrescher, was zur Folge hat, dass mehr Kurzstroh und andere Verunreinigungen die Siebe passieren und die Reinheit des Korns im Komtank verschlechtert ist.

Bisher wurde beim Bergauf- oder Bergabfahren die Vortriebsgeschwindigkeit des Mähdreschers vermindert und/oder die Gebläsedrehzahl und Sieböffnung von Hand verstellt, um die erwähnten nachteiligen Effekte zu vermeiden oder zu vermindern. Diese Vorgehensweise reduziert die Durchsatzleistung des Mähdreschers und die manuelle Verstellung der Gebläsedrehzahl und der Sieböffnung erweist sich als fehlerträchtig und führt nicht zu optimaler Qualität des gewonnenen Korns. In der Vergangenheit wurden daher verschiedene Vorschläge zur Automatisierung der Einstellung der Gebläsedrehzahl und der Sieböffnung beim Befahren eines Hanges gemacht.

Die DE 197 05 841 A1 schlägt vor, die Drehzahl des Gebläses beim Bergauffahren anhand einer erfassten Neigung des Mähdreschers selbsttätig zu reduzieren und beim Bergabfahren zu vergrößern. Basierend auf einem Sollwert/Istwert-Vergleich für die Siebverluste oder die Überkehrbelastung kann auch die Sieböffnung selbsttätig verstellt werden. Die Hangneigung wird bei der Sieböffnungseinstellung somit nicht direkt berücksichtigt, sondern nur indirekt in Form der auch von der Hangneigung abhängenden Siebverluste bzw. Überkehrbelastung.

In der EP 2 127 515 A1 wird vorgeschlagen, die Gebläsegeschwindigkeit eines elektromotorisch angetriebenen Reinigungsgebläses und die Schwingfrequenz eines elektromotorisch bewegten Reinigungssiebes selbsttätig basierend auf einer gemessenen Kombeschädigung, einem Kornverlust, einem Winkel des Mähdreschers gegenüber der Horizontalen, dem Luftdruck unterhalb der Siebe und/oder der Kornfeuchte zu regeln.

### Problem

Im Stand der Technik ist somit eine selbsttätige Einstellung der Drehzahl des Gebläses abhängig von der Hangneigung in Vorwärtsrichtung des Mähdreschers bekannt. Die Sieböffnung wird hingegen nicht (EP 2 127 515 A1) oder nur indirekt (DE 197 05 841 A1) und somit zeitverzögert und ungenau in Abhängigkeit von der Hangneigung in Vorwärtsrichtung des Mähdreschers verstellt, was zu den oben erwähnten Nachteilen führt.

Die der Erfindung zu Grunde liegende Aufgabe wird darin gesehen, ein Verfahren und eine Vorrichtung zur selbsttägigen Einstellung einer Reinigungseinrichtung bereitzustellen, die diese Nachteile nicht oder in einem verminderten Maße aufweisen.

### Lösung

Diese Aufgabe wird erfindungsgemäß durch die Lehre der Patentansprüche 1 und 9 gelöst, wobei in den weiteren Patentansprüchen Merkmale aufgeführt sind, die die Lösung in vorteilhafter Weise weiterentwickeln.

Eine Reinigungseinrichtung eines Mähdreschers weist ein Gebläse und wenigstens ein in eine Schwingbewegung versetzbares Sieb auf. Die Öffnungsgröße des Siebs ist durch einen fremdkraftbetätigten Aktor verstellbar, welcher mit einer Steuereinrichtung verbunden ist.

Die Sieböffnungsgröße wird zunächst für eine horizontale Ausrichtung des Mähdreschers ermittelt und eingestellt. Dazu kann auf an sich bekannte Vorgehensweisen zurückgegriffen werden. Die Steuereinrichtung steuert den Aktor derart an, dass die Öffnung des Siebes dieser ersten Sieböffnungsgröße entspricht.

Der Mähdrescher wird anschließend über ein Feld bewegt, das nicht unbedingt rein horizontal ist. Dabei wird der Neigungswinkels einer Hangneigung in Vorwärtsrichtung des Mähdreschers ermittelt, was beispielsweise anhand eines geeigneten Neigungssensors oder anhand von Signalen eines satellitenbasierten Positionserfassungssystems und einer geeigneten Karte hinsichtlich der Topographie des Felds (oder nur basierend auf den Signalen des satellitenbasierten Positionserfassungssystems, die auch Höhen- und somit Neigungsinformationen enthalten) erfolgen kann. Falls der Mähdrescher und somit die daran (abgesehen vom Schwingantrieb) unverstellbar angebrachte Reinigungseinrichtung nicht genau horizontal orientiert sind, sondern einen Hang hinauf oder hinab fahren, veranlasst die Steuereinrichtung den Aktor, die Sieböffnungsgröße derart einzustellen, dass die in die Horizontale projizierte Sieböffnungsgröße des Siebes mit der ersten Sieböffnungsgröße zumindest etwa übereinstimmt. Die Abmessung der (ersten) Sieböffnungsgröße in exakt horizontaler Richtung wird somit am Hang gegenüber der Ebene unverändert beibehalten, indem die Steuereinrichtung den Aktor veranlasst, durch eine Verstellung der Sieböffnung den geometrischen Effekt der Verkürzung oder Verlängerung der horizontalen Komponente der Sieböffnungsgröße durch die Neigung des Siebes aus der Horizontalen auszugleichen.

Auf diese Weise wird die in exakt horizontaler Richtung gemessene Sieböffnungsgröße und somit die Fläche, durch die das Korn in vertikaler Richtung schwerkraftbedingt durch das Sieb nach unten fallen kann, unabhängig von der Neigung des Hanges gehalten. Demnach wird durch die konstant bleibende horizontale Sieböffnungsgröße die Trennung von Korn und Kaff verbessert, indem die geometrischen Parameter des Siebes an Form und Größe des Korns angepasst werden. Die Wirkung des Siebs bleibt somit unabhängig von der Hangneigung und die bisher auftretenden Probleme werden vermieden oder vermindert.

Hierzu ist anzumerken, dass die Richtung des Luftstromes durch die Siebe durch die Stellung der Siebe beeinflusst wird, insbesondere, wenn es sich um Lamellensiebe handelt. So wird bei geschlossenen Sieben der Luftstrom flacher. Das unterstützt bei Bergabfahrt die Materialförderung, da die horizontale Kraftkomponente der Luftströmung auf das Material größer wird. Umgekehrt wird bei Bergauffahrt bei geöffneten Sieb die vertikale Komponente größer und das Material nicht so weit nach hinten ausgeblasen. Die Änderungen in beiden Richtungen können teilweise die gegenüber der Richtung der Schwerkraft veränderte mechanische Erregung durch veränderten Schwingrichtungswinkel kompensieren.

Weiterhin kann die Steuereinrichtung auch eine Veränderung der Drehzahl des Gebläses in Abhängigkeit von der Hangneigung veranlassen. Dabei wird die Drehzahl des Gebläses beim Hangabfahren vergrößert und beim Hangabfahren gegenüber einer für die Horizontalen optimierten Drehzahl vermindert. Die an die Hangneigung angepasste Gebläsedrehzahl soll die übermäßig verbesserte bzw. verschlechterte Materialförderung bei Bergabfahrt und bei Bergauffahrt kompensieren, mit dem Ziel einer gleichmäßigen Auflockerung des Materials auf den Sieben. Dabei wird insbesondere die Luftgeschwindigkeit über den Sieben konstant gehalten, wofür eine Kennlinie, Tabelle, Formel oder mathematische Funktion verwendet werden kann, in welcher die Gebläsedrehzahl in Abhängigkeit von der Sieböffnung eingetragen ist. Die Verstellung der Gebläsedrehzahl kann gleichzeitig (bevorzugt) mit der Verstellung der Sieböffnung oder zeitlich davor oder dahinter (weniger bevorzugt) erfolgen. Durch ein Schließen der Siebe wird der Staudruck unter den Sieben erhöht, wodurch bei gleicher Gebläsedrehzahl die Luftgeschwindigkeit in den Sieböffnungen zunimmt und aufgrund des verminderten Querschnitts der Sieböffnungen die (durchschnittliche) Luftgeschwindigkeit über den Sieben abnimmt. Beim Öffnen der Siebe wird der Strömungswiderstand geringer, wodurch bei gleicher Gebläsedrehzahl die Luftgeschwindigkeit in den Sieböffnungen kleiner und aufgrund des vergrößerten Querschnitts der Sieböffnungen die (durchschnittliche) Luftgeschwindigkeit über den Sieben größer wird. Die Gebläsedrehzahl kann somit in erster Näherung ebenfalls in Abhängigkeit von der Hangneigung in Fahrtrichtung und der damit verbundenen Änderung der Sieböffnung so angepasst werden, dass Luftgeschwindigkeit über den Sieben in etwa konstant bleibt, um das Erntegut jeweils in vergleichbarem Maße aufzulockern. Die Luftströmung wird derart angepasst, dass das Erntegut auf den Sieben mit derselben Geschwindigkeit gefördert wird, egal ob der Mähdrescher in der Ebene, bergab oder bergauf fährt. Dabei werden die veränderten Schwingrichtungswinkel und die durch die Lamellenöffnung veränderte An- und Ausströmrichtung durch angepasste Luftgeschwindigkeit kompensiert. Eventuell vorhandene einstellbare Strömungsleiteinrichtungen im Gebläsekanal oder unter den Sieben können diese Anpassung unterstützen. Zur Bestimmung der funktionellen Abhängigkeit der Luftgeschwindigkeit durch die Siebe von den Sieböffnungen und der Gebläsedrehzahl kann eine Kennlinie experimentell bestimmt werden. Die Nachführung von Sieböffnung und Gebläsedrehzahl nach der Hangneigung sind erste Näherungen, die auf den geometrischen Verhältnissen basieren und ermöglicht eine schnellere Anpassung.

Weiterhin ist auch eine Variation der Gebläsedrehzahl und/oder der Sieböffnungsgröße basierend auf einer zweiten Messgröße möglich. Die zweite Messgröße kann ein mit einem Sensor erfasster Kornverlust am Ende der Reinigungseinrichtung und/oder ein mit einem Sensor erfasstes Materialvolumen in einem Überkehrförderer und/oder ein Durchsatz der Reinigung und/oder eine mittels eines geeigneten Sensors (z. B. Kamera und Bildverarbeitungssystem) erfasste Reinheit des Korns im Komtank und/oder eine mittels eines geeigneten Sensors (z. B. Kamera und Bildverarbeitungssystem) erfasste Zusammensetzung der Überkehr sein. Dabei verstellt die Steuereinrichtung die Drehzahl des Gebläses (beispielsweise anhand abgespeicherter Kurven oder Tabellen oder Gleichungen oder Algorithmen) dahingehend, dass ein sensierter Kornverlust am Ende der Reinigungseinrichtung und/oder ein sensiertes Materialvolumen in einem Überkehrförderer minimiert wird oder werden. Alternativ oder zusätzlich kann eine Bedienerschnittstelle vorgesehen sein, mit welcher der Bediener des Mähdreschers in die Steuereinrichtung seine Einschätzung der Reinheit des Korns im Korntank oder anderer Aspekte des Reinigungsprozesses eingeben kann. Die Steuereinrichtung verändert selbsttätig, basierend auf der eingegebenen Einschätzung die Einstellung der Sieböffnung und/oder der Gebläsedrehzahl.

Auf diese Weise kann eine weitere Optimierung der Einstellung auf der Basis z. B. der gemessenen Reinigungsverluste und / oder der Überkehrmenge oder einem beliebigen zweiten Messwert erfolgen. Es erscheint hier sinnvoller, in erster Instanz die Gebläsedrehzahl (und nicht oder in zweiter Linie die Sieböffnung) zu regeln. Ziel sind minimale Verluste bzw. Überkehrvolumina oder Komtankverunreinigungen.

Eine Verstellung der Drehzahl des Gebläses und/oder der Sieböffnungsgröße wird vorzugsweise nur dann durchgeführt, wenn sich die Neigung des Mähdreschers und/oder die andere Messgröße mehr als um einen vorbestimmten Schwellenwert geändert haben. Dadurch vermeidet man unnötige Verstellungen mit nur geringfügigen Änderungen der Drehzahl.

Es sei noch angemerkt, dass auch eine selbsttätige Veränderung der Schwingfrequenz und/oder der Schwingungsrichtung und/oder der Schwingungsamplitude der Siebe basierend auf der Hangneigung und/oder wenigstens einer anderen der hier erwähnten Messgrößen möglich wäre. Die Verstellung der Gebläsedrehzahl ermöglicht es jedoch ähnliche Wirkungen zu erzielen und ist einfacher realisierbar.

Die Ausgaben der Steuereinrichtung an den Aktor zur Verstellung der Sieböffnung und zur Vorgabe der Gebläsedrehzahl können durch einen Bediener übersteuerbar sein, um eine manuelle Optimierung oder Anpassung zu ermöglichen.

Schließlich wird vorgeschlagen, dass die Steuereinrichtung in einem anfänglichen Lernmodus arbeiten kann, in welchem die (entsprechend der zuvor beschriebenen Vorgehensweise ermittelten) Einstellungen der Sieböffnungsgröße und der Gebläsedrehzahl für unterschiedliche Hangneigungen und unterschiedliche Werte wenigstens einer anderen Messgröße in einem Speicher abspeichert werden. Die Einstellungen können in Form einer Tabelle und/oder einer daraus abgeleiteten mathematischen Funktion abspeichert werden. In einem nachfolgenden Ausführungsmodus werden die gespeicherten Einstellungen anhand der aktuellen Hangneigung und des aktuellen anderen Parameters abgerufen und zur selbsttätigen Einstellung der Sieböffnungsgröße und der Gebläsedrehzahl verwendet.

### Ausführungsbeispiel

In den Zeichnungen ist ein nachfolgend näher beschriebenes Ausführungsbeispiel der Erfindung dargestellt. Es zeigt:
- Fig. 1: eine schematische, teilgeschnittene seitliche Ansicht eines selbstfahrenden Mähdreschers,
- Fig. 2: ein Schema der Steuereinrichtung der Erntemaschine zur Kontrolle der Sieböffnung und des Gebläses,
- Fig. 3 bis 5: Querschnitte eines Siebs in unterschiedlichen Neigungsstellungen, und
- Fig. 6: ein Flussdiagramm, nach dem die Steuereinrichtung des Mähdreschers gemäß einer ersten Variante eines Verfahrens zur Einstellung der Reinigungseinrichtung arbeitet,
- Fig. 7: ein Flussdiagramm, nach dem die Steuereinrichtung des Mähdreschers gemäß einer zweiten Variante eines Verfahrens zur Einstellung der Reinigungseinrichtung arbeitet, und
- Fig. 8: ein Flussdiagramm, nach dem die Steuereinrichtung des Mähdreschers gemäß einer dritten Variante eines Verfahrens zur Einstellung der Reinigungseinrichtung arbeitet.

### Mähdrescher

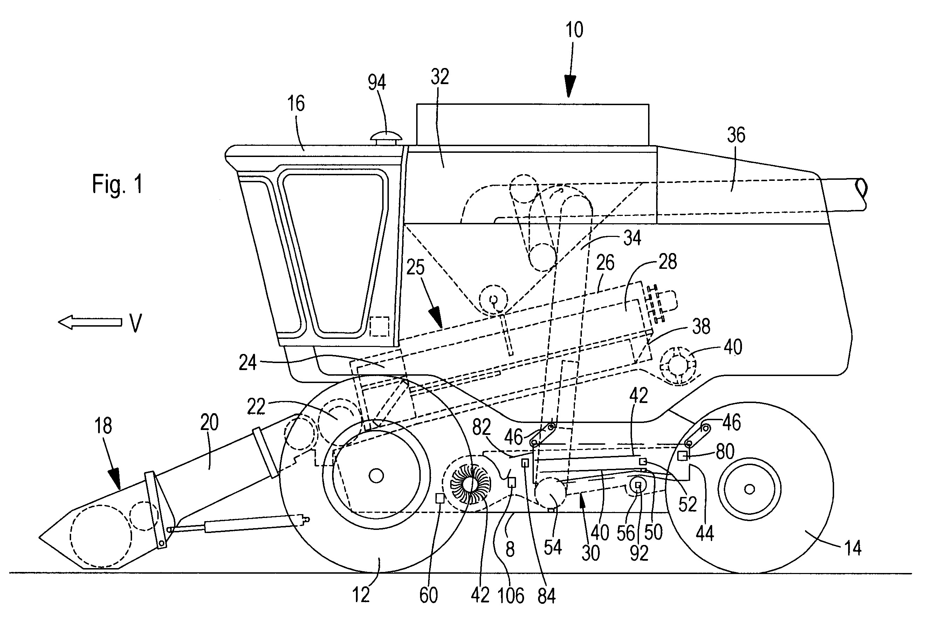

Ein in der Figur 1 gezeigter Mähdrescher 10 umfasst einen Rahmen 8, der auf zwei vorderen angetriebenen, im Eingriff mit dem Erdboden befindlichen Mitteln 12 in Form von Rädern und zwei hinteren, lenkbaren, im Eingriff mit dem Erdboden stehenden Mitteln 14 in Form von Rädern getragen wird und eine Fahrerkabine 16 trägt, von der aus die Erntemaschine 10 von einem Fahrer bedient werden kann. Bei der Ernte und beim Fahren auf einer Straße wird die Erntemaschine 10 in der durch die Blickrichtung des Fahrers in der Fahrerkabine 16 definierten, normalen Vorwärtsrichtung V voran bewegt. Sie kann aber vorübergehend, z. B. zum Wenden, auch rückwärts gefahren werden.

Ein Emtevorsatz 18 in Form eines Schneidwerks wird verwendet, um Erntegut aufzunehmen und es einem Einzugsförderer 20 in Form eines Schrägförderers zuzuführen. Das Erntegut wird vom Einzugsförderer 20 einer Leittrommel 22 zugeführt. Die Leittrommel 22 leitet das Erntegut nach oben durch einen Einlassübergangsbereich 24 an eine axiale Dresch- und Trennvorrichtung 25 weiter. Die Dresch- und Trennvorrichtung 25 umfasst ein zylindrisches Rotorgehäuse 26 und einen im Rotorgehäuse 26 angeordneten Rotor 28.

Die Dresch- und Trennvorrichtung 25 drischt und trennt das geerntete Gut. Korn und Spreu fallen durch Roste am Boden der Erntegutbearbeitungseinrichtung 25 in eine Reinigungseinrichtung 30. Die Reinigungseinrichtung 30 entfernt die Spreu und führt das saubere Korn einem Kornelevator 34 zu. Der Kornelevator 34 legt das saubere Korn in einem Komtank 32 ab. Das saubere Korn im Komtank 32 kann durch einen Entladeschneckenförderer 36 in einen Anhänger oder Lastwagen entladen werden. Gedroschenes, vom Korn befreites Stroh wird aus der Dresch- und Trennvorrichtung 25 durch einen Auslass 38 heraus zu einer Abgabetrommel 40 geführt. Die Abgabetrommel 40 wirft das Stroh am rückwärtigen Ende der Erntemaschine 10 aus. Sie könnte es auch einem Strohhäcksler (nicht gezeigt) zuführen, der es häckselt und über die Schnittbreite des Erntevorsatzes 18 über das Feld verteilt. Die antreibbaren Komponenten der Erntemaschine 10 werden durch einen Verbrennungsmotor angetrieben.

Im Folgenden beziehen sich alle Richtungsangaben, wie vom, hinten, oben und unten auf die normale Vorwärtsrichtung V.

### Reinigungseinrichtung

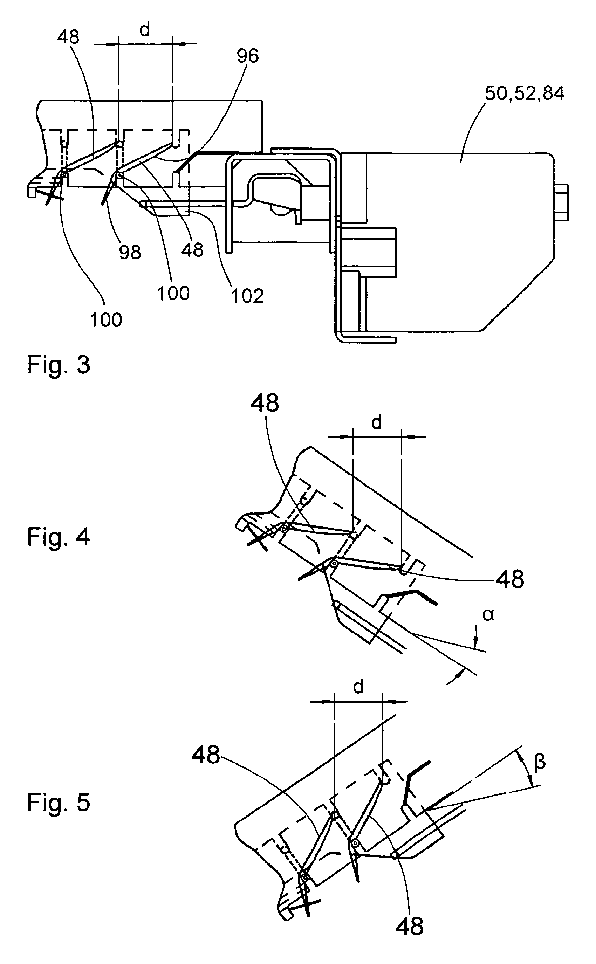

Die Reinigungseinrichtung 30 umfasst in an sich bekannter Weise ein Gebläse 42, das Umgebungsluft ansaugt und nach hinten hin abgibt, um ein Vorsieb 82, ein unteres Sieb 40 und ein oberes Sieb 42 von unten her mit einem Luftstrom zu beaufschlagen. Die Siebe 82, 40, 42 sind innerhalb eines Siebkastens 44 angebracht, der durch Kurbelarme 46 am Rahmen 8 abgestützt ist, von denen einer an seinem rahmenseitigen Ende durch einen nicht gezeigten Antrieb in Drehung versetzbar ist. Bei dem Antrieb kann es sich um ein mechanisches Getriebe handeln, das mit dem Verbrennungsmotor des Mähdreschers 10 in Antriebsverbindung steht, oder um einen Hydraulik- oder Elektromotor. Der Antrieb rotiert mit konstanter oder veränderbarer Geschwindigkeit. Die Siebe 82, 40, 42 vollführen somit eine Kreisbahn mit einer Hin- und Herbewegung in Vorwärtsrichtung als auch mit einer Auf- und Abbewegung. Die Siebe 82, 40, 42 weisen sich in quer zur Vorwärtsrichtung erstreckende, durch jeweils einen Aktor 84, 50, 52 um ihre Längsachsen drehbare Lamellen 48 (vgl. Figur 3) auf, zwischen denen verstellbare Öffnungen verbleiben.

Das Vorsieb 82 wird an seinem vorderen Ende von der Dresch- und Trenneinrichtung 25 her mit Erntegut beaufschlagt, das aus Nutzteilen (Fruchtstände, z. B. Korn oder Maiskörner) und Emtegutresten (Spreu, Kurzstrohanteile) besteht und führt das an seiner rückwärtigen Kante abgegebene Erntegut dem stromab folgenden oberen Sieb 42 zu, während durch das Vorsieb 82 fallendes Korn über einen Schneckenförderer 54 den Kornelevator 34 direkt in den Komtank 32 gelangt. Die durch das obere Sieb 42 fallenden, vorgereinigten Bestandteile der Erntegutreste gelangen durch das untere Sieb 40. Die durch das untere Sieb 40 fallenden Bestandteile, bei denen es sich um gereinigtes Korn handelt, werden durch einen in Querrichtung angeordneten Schneckenförderer 54 zusammengeführt und dem Kornelevator 34 übergeben. Die rückseitig vom unteren Sieb 40 fallenden Emtegutreste werden durch einen anderen Schneckenförderer 56 zusammengeführt und durch einen Überkehrförderer (nicht gezeigt) wieder der Dresch- und Trenneinrichtung 25 oder einem Nachdrescher (nicht gezeigt) zugeführt, der sie dann wieder auf das obere Sieb 42 abgibt. Die rückseitig am oberen Sieb 42 abgegebenen Emtegutreste werden durch einen Kaffstreuer oder den erwähnten Strohhäcksler (beide nicht gezeigt) auf dem Feld verteilt. Das Gebläse 42 wird durch einen Motor 60 angetrieben, bei dem es sich um einen Elektro- oder Hydromotor handeln kann. Alternativ wird das Gebläse 42 über einen Riemenvariator (nicht gezeigt) angetrieben.

### Steuereinrichtung

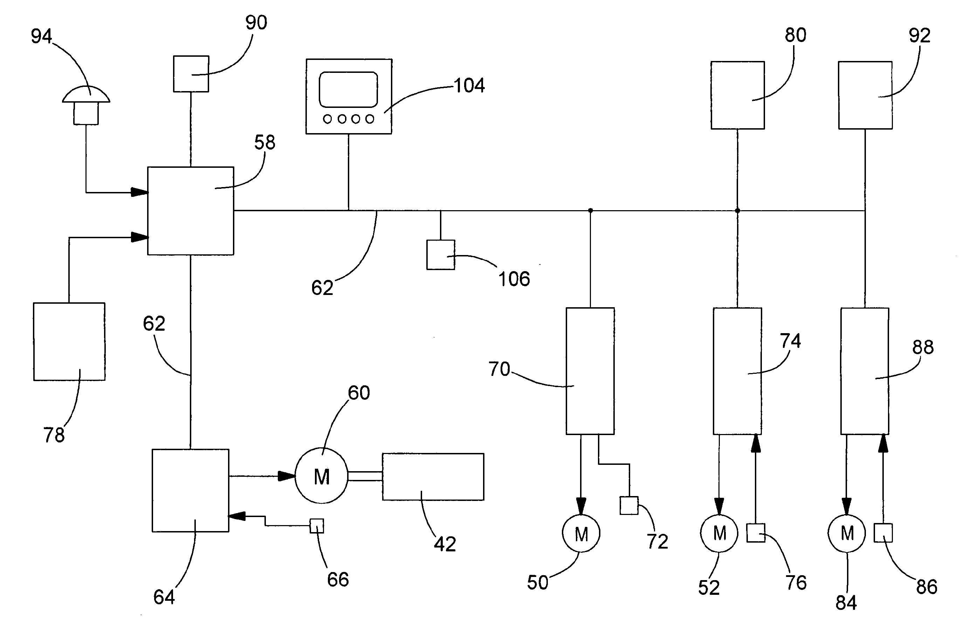

Die Figur 2 zeigt schematisch eine Steuereinrichtung 58 des Mähdreschers 10, die zu einer selbsttätigen Einstellung der Drehzahl des Gebläses 42 und der Aktoren 50, 52, 84 für die Öffnungsweite der Siebe 40, 42, 82 dient. Die Steuereinrichtung 58 ist elektrisch über einen Bus 62 mit einer ersten Steuerung 64 verbunden, die ihrerseits den Motor 60 (oder einen Riemenvariator für den Antrieb des Gebläses 42) kontrolliert und mit einem Sensor 66 zur Erfassung der Drehzahl des Motors 60 verbunden ist. Die erste Steuerung 64 erhält von der Steuereinrichtung 58 über den Bus 62 einen Sollwert für die Drehzahl des Motors 60 und regelt dessen Betriebsspannung derart, dass der Ausgangswert des Sensors 66 eine Drehzahl des Motors 60 anzeigt, die mit dem Sollwert zumindest näherungsweise übereinstimmt.

Die Steuereinrichtung 58 ist weiterhin über den Bus 62 mit einer zweiten Steuerung 70 verbunden, die einerseits den als Elektromotor ausgeführten Aktor 50 kontrolliert und andererseits mit einem Sensor 72 zur Erfassung der aktuellen Position der Lamellen des unteren Siebs 40 verbunden ist. Ein derartiger Sensor kann als Potentiometer oder entsprechend der Offenbarung der EP 1 264 530 A1, deren Inhalt durch Verweis mit in die vorliegenden Unterlagen aufgenommen wird, als inkremental zählender Drehwinkelsensor ausgeführt sein.

Die Steuereinrichtung 58 ist weiterhin über den Bus 62 mit einer dritten Steuerung 74 verbunden, die einerseits den als Elektromotor ausgeführten Aktor 52 kontrolliert und andererseits mit einem Sensor 76 zur Erfassung der aktuellen Position der Lamellen des oberen Siebs 42 verbunden ist, dessen Aufbau dem des Sensors 72 entspricht.

Die Steuereinrichtung 58 ist über den Bus 62 auch mit einer vierten Steuerung 88 verbunden, die einerseits den als Elektromotor ausgeführten Aktor 84 kontrolliert und andererseits mit einem Sensor 86 zur Erfassung der aktuellen Position der Lamellen des Vorsiebs 82 verbunden ist, dessen Aufbau dem des Sensors 72 entspricht.

Weiterhin ist die Steuerung 58 mit einem Neigungssensor 78 zur Erfassung der Neigung des Mähdreschers 10 gegenüber der Horizontalen in Vorwärts- und Seitenrichtung, einem Empfänger 94 für Signale eines Positionsbestimmungssystems (z. B. GPS), einem Verlustsensor 80 am rückwärtigen Ende des oberen Siebs 42, einem Speicher 90 und einem Überkehrdurchsatzsensor 92 verbunden. Der Verlustsensor 80 kann als gebräuchlicher Prallplattensensor ausgeführt sein, der aufprallende Verlustkörner erkennt. Der Überkehrdurchsatzsensor 92 kann als optischer Lichtschrankensensor aufgebaut sein und das Volumen im Überkehrförderer detektieren, der das Erntegut vom Schneckenförderer 56 dem Nachdrescher oder der axialen Dresch- und Trennvorrichtung 25 zuführt.

### Hangneigungsabhängigkeit der Siebe

In der Figur 3 ist eines der Siebe 40, 42, 82 in einem horizontalen Schnitt entlang der Vorwärtsrichtung V dargestellt. Die Lamellen 48 erstrecken sich horizontal und quer zur Vorwärtsrichtung V und umfassen einen in sich flachen, sich schräg nach hinten und oben erstreckenden oberen Abschnitt 96 und einen in sich flachen unteren Abschnitt 98, der gegenüber dem oberen Abschnitt 96 nach unten abgewinkelt ist. An der Verbindungsstelle der Abschnitte 96, 98 ist je eine Drehachse 100 vorgesehen, um die die Lamellen 48 mittels einer durch den zugehörigen Aktor 50, 52, 84 in Vorwärtsrichtung verschiebbaren Verstellstange 102 verschwenkbar sind. Einzelheiten zum Aufbau des Verstellantriebs der Siebe 40, 42, 82 sind in der der EP 1 264 530 A1 beschrieben, deren Inhalt durch Verweis mit in die vorliegenden Unterlagen aufgenommen wird.

Falls der Mähdrescher 10 und somit das Sieb 40, 42, 82 genau horizontal orientiert sind, wie in der Figur 3, ergibt sich bei einer gegebenen Drehstellung der Lamellen 48 um ihre Drehachsen 100 ein in horizontaler Richtung gemessener Abstand d zwischen den oberen Spitzen der oberen Abschnitte 96 der Lamellen 48. Dieser Abstand d ist für die - auf der Schwerkraft basierende - Abscheidefunktion der Siebe 40, 42, 82 entscheidend.

Falls der Mähdrescher 10 und somit das Sieb 40, 42, 82 nun einen Hang mit einem Steigungswinkel α hinauf fahren, ist das Sieb 40, 42, 82 nach hinten geneigt, wie in der Figur 4 dargestellt. Das hat zur Folge, dass der-wieder in genau horizontaler Richtung gemessene - Abstand d zwischen den Lamellen 48 aus geometrischen Gründen kleiner als in der Figur 3 ist, denn der Abstand d entspricht der horizontalen Projektion der Spitzen der Lamellen 48.

Analog verringert sich der in genau horizontaler Richtung gemessene Abstand d auch, wenn der Mähdrescher 10 und die Siebe 40, 42, 82 einen Hang mit einem Steigungswinkel β hinabfahren, wie in der Figur 5 dargestellt.

Diese Änderung der Geometrie der Siebe 40, 42, 82 wird gemäß der vorliegenden Erfindung durch die Steuereinrichtung 58 berücksichtigt und ausgeglichen.

### Erste Ausführungsform einer Reinigungseinstellung

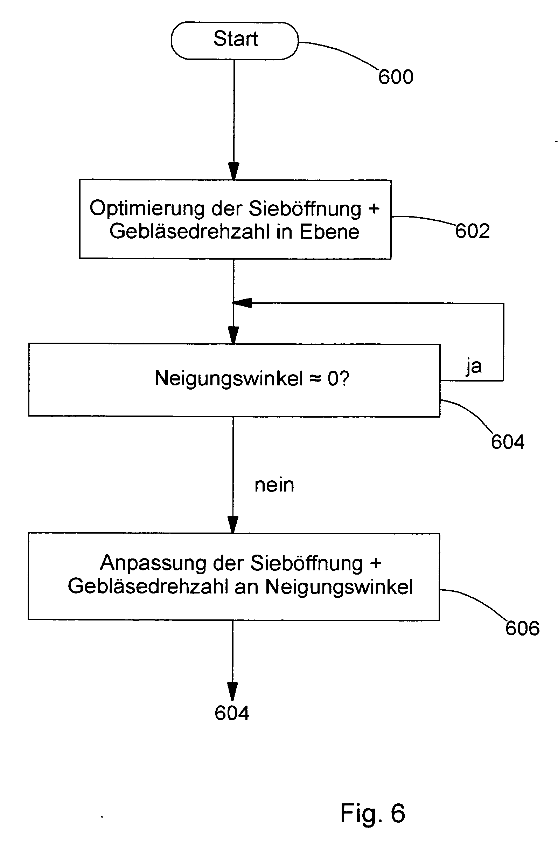

Die Figur 6 zeigt ein Flussdiagramm, nach dem die Steuereinrichtung 58 gemäß einer ersten Variante eines erfindungsgemäßen Verfahrens zur Einstellung der Reinigungseinrichtung arbeitet. Nach dem Start im Schritt 600 wird im Schritt 602 zunächst eine Optimierung der Sieböffnung und der Gebläsedrehzahl in der Ebene durchgeführt. Hier wird auf übliche Vorgehensweisen zurückgegriffen, wie ein Ablesen der Einstellung aus Tabellen anhand der Erntegutart und ggf. weiterer Parameter wie die Erntegutfeuchte und Reifheitsgrad, Erfassen der Siebverluste durch eine Prüfschale oder den Verlustsensor 80 und entsprechendes sukzessives Verbessern der Einstellung oder ein rein iteratives Ermitteln des Abstands d anhand der Beurteilung des Siebergebnisses (Verluste, Überkehrbelastung und/oder Komreinheit im Korntank durch Bedienerbeurteilung und entsprechende Eingabe mittels einer Bedienerschnittstelle 104) durch den Bediener oder eine auf den Sensoren 80 und 92 für die Verluste und Überkehrbelastung und/oder einen nicht gezeigten Sensor für die Komreinheit im Komtank basierende, selbsttätige Einstellung. Am Ende dieses Schrittes liegt für jedes der Siebe 40, 42, 82 eine (in der Regel jeweils andere) erste Siebeinstellung mit einem Abstand dsoll vor, die für einen horizontal ausgerichteten Mähdrescher 10 optimiert und angepasst ist.

Im folgenden Schritt 604, der nun nicht mehr unbedingt auf horizontalem Gelände stattfinden muss, wird abgefragt, ob der Neigungswinkel (α oder β in den Figuren 4 und 5) des Mähdreschers in Vorwärtsrichtung etwa 0° beträgt. Der Neigungswinkel wird anhand des Neigungssensors 78 und/oder den Positionssignalen des Empfängers 94 und einer im Speicher 90 abgelegten Karte hinsichtlich der Topographie des Geländes erfasst (oder nur anhand der Positionssignale des Empfängers 94, die auch Höheninformationen enthalten, aus denen unter Verwendung von zwei nacheinander erfassten Höhen die Neigung abgeleitet werden kann; es wäre auch denkbar, zwei Empfänger 94 in Vorwärtsrichtung V hintereinander am Mähdrescher 10 anzubringen, um aus deren Höheninformation direkt die Neigung in Vorwärtsrichtung abzuleiten). Beträgt der Neigungswinkel etwa 0°, folgt wieder der Schritt 604. Bei horizontalem Gelände wird demnach einfach die im Schritt 602 aufgefundene Einstellung der Reinigungseinrichtung beibehalten.

Ergibt sich hingegen im Schritt 604, dass ein nicht-horizontales Gelände befahren wird, folgt der Schritt 606, in welchem die Aktoren 50, 52, 84 durch die Steuereinrichtung 58 veranlasst werden, die Lamellen 48 in eine Stellung zu verbringen, bei der der in horizontaler Richtung gemessene Abstand d wieder dem Abstand dsoll entspricht. Die Ansteuerung der Aktoren 50, 52, 84 erfolgt durch die Steuereinrichtung 58 und die jeweiligen Steuerungen 70, 74, 88 anhand des Neigungswinkels in Vorwärtsrichtung V und anhand der Geometrie der einzelnen Siebe 40, 42, 82. Durch die (anders als in den Figuren 4 und 5) neigungswinkelunabhängige Beibehaltung des in horizontaler Richtung gemessenen Abstands dsoll wird die Abscheidefunktion der Siebe 40, 42, 82 vom Neigungswinkel zumindest näherungsweise unabhängig. Die Sieböffnung wird somit ausgehend von der Einstellung der Figur 3 in den Figuren 4 und 5 vergrößert, um d konstant zu halten.

Außerdem verstellt die Steuereinrichtung 58 im Schritt 606 die Drehzahl des Gebläses 42 ausgehend von dem Wert aus Schritt 602 in der Weise, dass die im Schritt 606 durch die Änderung der Öffnungsweite des Siebes 40, 42, 82 bewirkte Änderung des Luftstroms kompensiert wird. Werden somit die Siebe 40, 42, 82 weiter geschlossen, wird der Luftstrom durch die Siebe 40, 42, 82 kleiner. Der Luftstrom wird somit im Schritt 606 vergrößert, indem die Drehzahl des Gebläses 42 vergrößert wird. Analog wird der Luftstrom durch Absenken der Drehzahl des Gebläses 42 vermindert, wenn die Siebe 40, 42, 82 weiter geöffnet werden. Durch die Änderung der Gebläsedrehzahl wird erreicht, dass die Luftgeschwindigkeit an der Oberseite der Siebe 40, 42, 82 zumindest näherungsweise konstant bleibt, um auch die in der Ebene erzielte Reinigungswirkung beizubehalten. Auf den Schritt 606 folgt wieder der Schritt 604.

Die Vorgehensweise nach Figur 6 umfasst keine Regelung mit einer Rückkopplung des Ergebnisses des Reinigungsprozesses, sondern nur eine Steuerung der Sieböffnung und der Gebläsedrehzahl in Abhängigkeit vom Neigungswinkel des Mähdreschers 10 in Vorwärtsrichtung. Sie arbeitet demnach relativ schnell (ohne nennenswerte Zeitkonstanten) und wenig fehleranfällig.

### Zweite Ausführungsform einer Reinigungseinstellung

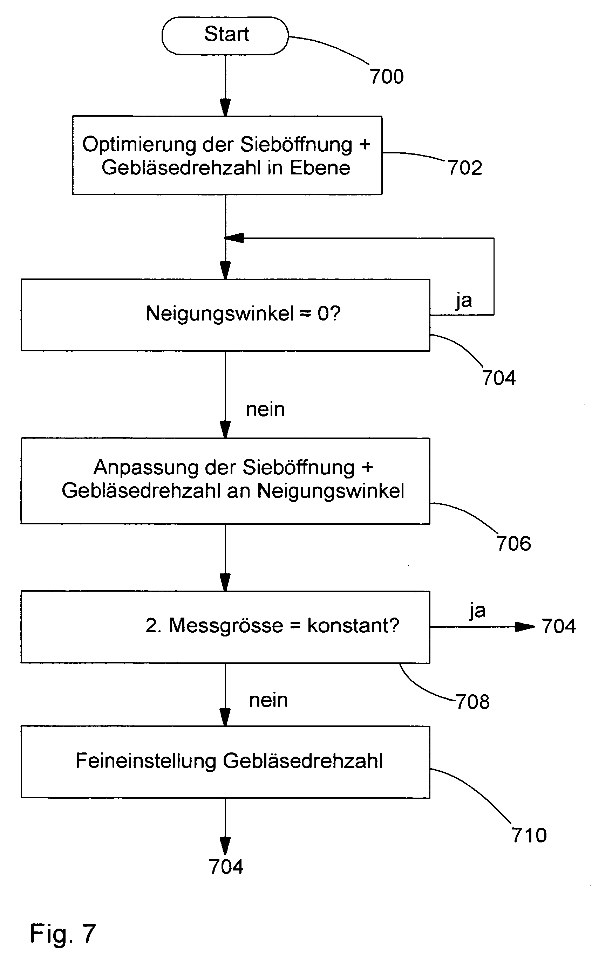

Die Figur 7 zeigt ein Flussdiagramm, nach dem die Steuereinrichtung 58 gemäß einer zweiten Variante eines erfindungsgemäßen Verfahrens zur Einstellung der Reinigungseinrichtung arbeitet. Die Schritte 700 bis 706 entsprechen den Schritten 600 bis 606 der Figur 6. An den Schritt 706 schließt sich jedoch nicht direkt der Schritt 704 wieder an, sondern es folgt zunächst der Schritt 708, in dem abgefragt wird, ob eine zweite Messgröße konstant ist. Bei dieser zweiten Messgröße kann es sich beispielsweise um den Durchsatz der Reinigungseinrichtung 30 oder die Materialmenge in der Überkehr (Sensor 80) oder die Verluste am Ende des oberen Siebes 42 (Sensor 92) oder einen beliebigen anderen Messwert eines Sensors oder eine Bedienereingabe über die Bedienerschnittstelle 104 hinsichtlich der Zufriedenheit mit einem Aspekt des Erntegutverarbeitungsprozesses im Mähdrescher 10 handeln (Kornreinheit, Überkehrzusammensetzung etc.). Der Durchsatz der Reinigungseinrichtung 30 kann in an sich bekannter Weise mittels eines Sensors 106 zur Erfassung des Luftdrucks unter einem Sieb 40, 42, 82 und/oder der Luftgeschwindigkeit und/oder des Luftvolumenstroms in der Reinigungseinrichtung 30 erfasst werden, oder durch einen beliebigen anderen Durchsatzsensor, z. B. im Schrägförderer 20 oder mit einer Erfassung des stehenden Bestands auf dem Feld. Ist die zweite Messgröße konstant, folgt wieder der Schritt 704, sonst der Schritt 710.

Im Schritt 710 wird die Drehzahl des Gebläses 42 an die jeweilige zweite Messgröße angepasst. Im Schritt 710 wird die Gebläsedrehzahl im Sinne einer Optimierung der zweiten Messgröße verstellt (z. B. Minimierung der Verluste und der Überkehrmaterialmenge). Da eine Anpassung der Sieböffnungseinstellung an den Neigungswinkel (α oder β) bereits im Schritt 706 anhand der Werte aus Schritt 702 vorgenommen wurde, wird im Schritt 710 nur die Gebläsedrehzahl verändert. Es wäre aber auch denkbar, auch im Schritt 710 eine Verstellung der Sieböffnung vorzunehmen, analog der anhand des Schritts 710 bezüglich der Gebläsedrehzahl beschriebenen Vorgehensweise. Auf den Schritt 710 folgt wieder der Schritt 704.

Zur Durchsatzmessung anhand des statischen Drucks des Gebläses 42 anhand des Sensors 106 ist noch anzumerken, dass sich beim Bergabfahren zunächst Material auf den Sieben 40, 42, 82 ansammeln wird. Dadurch steigt - auch bei konstantem Durchsatz - der statische Druck und verringert sich die Luftgeschwindigkeit. Bei der auf der Druckmessung basierenden Drehzahlanpassung des Gebläses 42 kann dieser Effekt a priori berücksichtigt werden.

Die Vorgehensweise der Steuerung nach Figur 7 ergänzt die reine hangneigungsbasierte Einstellung der Sieböffnung und Gebläsedrehzahl der Figur 6 noch durch eine Feineinstellung der Gebläsedrehzahl, die auf einer Regelung anhand eines Aspekts des Emtegutverarbeitungsprozesses beruht.

### Dritte Ausführungsform einer Reinigungseinstellung

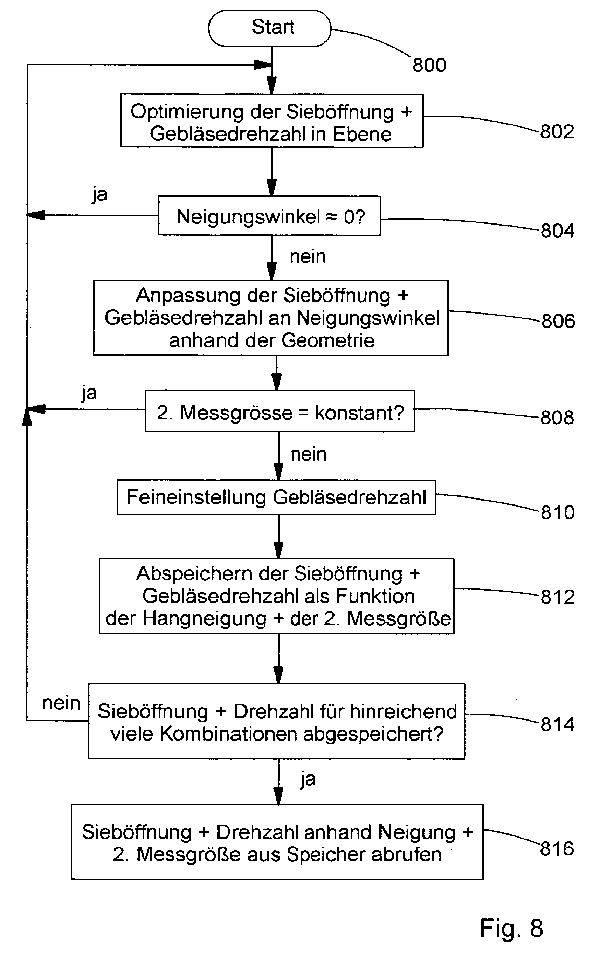

Die Figur 8 zeigt ein Flussdiagramm, nach dem die Steuereinrichtung 58 gemäß einer dritten Variante eines erfindungsgemäßen Verfahrens zur Einstellung der Reinigungseinrichtung arbeitet. Die Schritte 800 bis 810 entsprechen den Schritten 700 bis 710 der Figur 7. An den Schritt 810 schließt sich jedoch nicht direkt der Schritt 804 wieder an, sondern es folgt zunächst der Schritt 812, in dem die Sieböffnung dsoll (aus Schritt 806) und die Gebläsedrehzahl (aus Schritt 810) als Funktion der Neigung in Vorwärtsrichtung und der zweiten Messgröße im Speicher 90 abgespeichert werden, beispielsweise in Form einer Tabelle oder Liste.

Im Schritt 814 wird anschließend abgefragt, ob im Speicher 90 die Sieböffnungen dsoll und die Gebläsedrehzahlen für hinreichend viele Kombinationen der Hangneigung und der zweiten Messgröße abgespeichert sind. Ist das nicht der Fall, folgt wieder der Schritt 802, andernfalls der Schritt 816.

Im Schritt 816 ist ein in den bisherigen Schritten durchgeführter Lemmodus beendet. Nun wird in einem Ausführungsmodus die Einstellung der Sieböffnung und der Gebläsedrehzahl nur anhand der Neigung in Vorwärtsrichtung V und anhand der zweiten Messgröße bestimmt, indem die entsprechenden Werte aus dem Speicher 90 abgerufen werden. Es besteht auch die Möglichkeit, beispielsweise durch Regression aus den einzelnen Daten im Speicher 90 mathematische Funktionen abzuleiten (bzw. Funktionen vorzugeben und deren Parameter an die Daten im Speicher 90 anzupassen) und/oder aus diskreten Daten im Speicher 90 die Einstellungen für zwischen den abgespeicherten Einstellungen liegende Zwischenwerte abzuleiten, um für jeden möglichen Neigungswinkel über Einstelldaten zu verfügen. Da in den im Speicher 90 abgelegten Daten die Abhängigkeit der Sieböffnungen von den Neigungswinkeln in der Weise berücksichtigt sind, dass die in die Horizontale projizierte Sieböffnungsgröße des Siebes 40, 42, 82 mit der ersten Sieböffnungsgröße (dsoll) zumindest etwa übereinstimmt, wird diese Relation implizit auch im Schritt 816 berücksichtigt.

Die Vorgehensweise der Steuerung nach Figur 8 umfasst somit den Lernmodus, in dem optimale Einstellungen für die Sieböffnung und die Gebläsedrehzahl gemäß der Vorgehensweise aus Figur 7 ermittelt und abgespeichert werden. Im folgenden Ausführungsmodus werden diese Einstellungen nur anhand des Neigungswinkels und der zweiten Messgröße aus dem Speicher abgerufen. Je nach Wahl der zweiten Messgröße wird im Ausführungsmodus eine Steuerung (ohne Rückkopplung, wenn die zweite Messgröße beispielsweise ein Durchsatzmesswert ist) oder eine Regelung (mit Rückkopplung, wenn die zweite Messgröße beispielsweise ein Messwert eines der Sensoren 80 oder 92 ist) durchgeführt.

Es sei noch angemerkt, dass in allen Ausführungsformen auch der seitliche Neigungswinkel des Mähdreschers 10 und somit der Siebe 40, 42, 82 berücksichtigt werden könnte. Auch kann der Bediener über die Bedienerschnittstelle 104 die Ausgaben der Steuereinrichtung 58 übersteuern; ggf. besteht eine Wahlmöglichkeit, ob die durch den Bediener geänderten oder die ursprünglichen Ausgaben der Steuereinrichtung 58 im Schritt 812 abgespeichert werden. Der Lemmodus der Schritte 800 bis 814 kann (auch schon werksseitig) an einem einzelnen Mähdrescher 10 durchgeführt und die Daten im Speicher 90 für andere, baugleiche Mähdrescher 10 verwendet werden. Weiterhin können anstelle der in der Figur 3 gezeigten Lamellensiebe auch verstellbare Lochsiebe (s. EP 1 348 331 A1) eingesetzt werden.

## Patentansprüche

1. Verfahren zur Einstellung einer Reinigungseinrichtung (30) eines Mähdreschers (10), wobei die Reinigungseinrichtung (30) ein Gebläse (42) und wenigstens ein in eine Schwingbewegung versetzbares Sieb (40, 42, 82) mit einer durch einen fremdkraftbetätigten, mit einer Steuereinrichtung (58) verbundenen Aktor (50, 52, 84) verstellbaren Sieböffnungsgröße aufweist und das Verfahren folgende Schritte umfasst:
Ermitteln und Einstellen einer für eine horizontale Ausrichtung des Mähdreschers (10) angepassten ersten Sieböffnungsgröße (dsoll);
Ermitteln eines Neigungswinkels (α, β) einer Hangneigung in Vorwärtsrichtung (V) des Mähdreschers (10) und Zuführen eines Signals hinsichtlich des Neigungswinkels (α, β) zur Steuereinrichtung (58);
**dadurch gekennzeichnet, dass** die Steuereinrichtung (58) den Aktor (50, 52, 82) beim Befahren eines Hanges veranlasst, die Sieböffnungsgröße derart einzustellen, dass die in die Horizontale projizierte Sieböffnungsgröße des Siebes (40, 42, 82) mit der ersten Sieböffnungsgröße (dsoll) zumindest etwa übereinstimmt.

2. Verfahren nach Anspruch 1, **dadurch gekennzeichnet, dass** die Steuereinrichtung (58) auch eine Veränderung der Drehzahl des Gebläses (42) in Abhängigkeit von der Hangneigung (α, β) veranlasst.

3. Verfahren nach Anspruch 2, **dadurch gekennzeichnet, dass** die Steuereinrichtung (58) eine Veränderung der Drehzahl des Gebläses (42) in Abhängigkeit von der hangneigungsabhängigen Sieböffnungsgröße des Siebes (40, 42, 82) in der Weise veranlasst, dass die Luftgeschwindigkeit oberhalb des Siebes (40, 42, 82) von der Hangneigung (α, β) unabhängig ist.

4. Verfahren nach einem der Ansprüche 1 bis 3, **dadurch gekennzeichnet, dass** die Steuerung die Sieböffnungsgröße und/oder die Drehzahl des Gebläses (42) zusätzlich in Abhängigkeit von wenigstens einer zweiten Messgröße verändert.

5. Verfahren nach Anspruch 4, **dadurch gekennzeichnet, dass** die zweite Messgröße ein mit einem Sensor (80) erfasster Kornverlust am Ende der Reinigungseinrichtung (30) und/oder ein mit einem Sensor (92) erfasstes Materialvolumen in einem Überkehrförderer und/oder ein Durchsatz der Reinigungseinrichtung (30) und/oder eine sensierte Reinheit des Korns im Komtank (32) und/oder eine durch einen Bediener eingegebene Einschätzung der Reinheit des Korns in einem Korntank (32) und/oder eine sensierte Erfassung der Zusammensetzung der Überkehr ist.

6. Verfahren nach Anspruch 5, **dadurch gekennzeichnet, dass** der Durchsatz der Reinigungseinrichtung (30) anhand eines Luftdrucks unter einem Sieb und/oder einer Luftgeschwindigkeit und/oder eines Luftvolumenstroms in der Reinigungseinrichtung (30) erfasst wird.

7. Verfahren nach einem der Ansprüche 1 bis 6, **dadurch gekennzeichnet, dass** die Ausgaben der Steuereinrichtung (58) durch einen Bediener übersteuerbar sind.

8. Verfahren nach einem der Ansprüche 2 bis 7, **dadurch gekennzeichnet, dass** die Steuereinrichtung (58) in einem anfänglichen Lemmodus die ermittelten Einstellungen der Sieböffnungsgröße und der Gebläsedrehzahl für unterschiedliche Hangneigungen (α, β) und optional für unterschiedliche Werte wenigstens eines anderen Parameters vorzugsweise in Form einer Tabelle und/oder einer daraus abgeleiteten mathematischen Funktion abspeichert und in einem nachfolgenden Ausführungsmodus die gespeicherten Einstellungen anhand der aktuellen Hangneigung (α, β) und des aktuellen anderen Parameters abruft und zur selbsttätigen Einstellung der Sieböffnungsgröße und der Gebläsedrehzahl verwendet.

9. Reinigungseinrichtung (30) für einen Mähdrescher (10), die ein Gebläse (42) und wenigstens ein in eine Schwingbewegung versetzbares Sieb (40, 42, 82) mit einer durch einen fremdkraftbetätigten, mit einer Steuereinrichtung (58) verbundenen Aktor (50, 52, 84) verstellbaren Sieböffnungsgröße aufweist, wobei die Steuereinrichtung (58) betreibbar ist, eine für eine horizontale Ausrichtung des Mähdreschers (10) angepasste erste Sieböffnungsgröße (dsoll) zu ermitteln und einzustellen und der Steuereinrichtung (58) ein Signal hinsichtlich des Neigungswinkels (α, β) einer Hangneigung in Vorwärtsrichtung (V) des Mähdreschers (10) zuführbar ist, **dadurch gekennzeichnet, dass** die Steuereinrichtung (58) betreibbar ist, den Aktor (50, 52, 84) beim Befahren eines Hanges selbsttätig zu veranlassen, die Sieböffnungsgröße derart einzustellen, dass die in die Horizontale projizierte Sieböffnungsgröße des Siebes (40, 42, 84) mit der ersten Sieböffnungsgröße (dsoll) zumindest etwa übereinstimmt.

10. Mähdrescher (10) mit einer Reinigungseinrichtung (30) nach Anspruch 9.

## Claims

1. Method for adjusting a cleaning device (30) of a combine harvester (10), wherein the cleaning device (30) has a blower (42) and at least one screen (40, 42, 82) which can be made to move in an oscillating fashion and has a screen opening size which can be adjusted by means of an extraneous-force-activated actuator (50, 52, 84) which is connected to a control device (58), and the method comprises the following steps:
determining and adjusting a first screen opening size (dsetp) which is adapted for a horizontal orientation of the combine harvester (10);
determining an inclination angle (α, β) of a slope gradient in the forward direction (V) of the combine harvester (10), and feeding a signal relating to the inclination angle (α, β) to the control device (58);
**characterized in that** the control device (58) causes the actuator (50, 52, 82) to adjust the screen opening size as it travels along a slope, in such a way that the screen opening size, projected into the horizontal, of the screen (40, 42, 82), corresponds at least approximately to the first screen opening size (dsetp).

2. Method according to Claim 1, **characterized in that** the control device (58) also causes the rotational speed of the blower (42) to change as a function of the slope gradient (α, β).

3. Method according to Claim 2, **characterized in that** the control device (58) causes the rotational speed of the blower (42) to change as a function of the slope-gradient-dependent screen opening size of the screen (40, 42, 82) in such a way that the air speed above the screen (40, 42, 82) is independent of the slope gradient (α, β).

4. Method according to one of Claims 1 to 3, **characterized in that** the controller additionally changes the screen opening size and/or the rotational speed of the blower (42) as a function of at least one second measurement variable.

5. Method according to Claim 4, **characterized in that** the second measurement variable is a loss of grain detected at the end of the cleaning device (30) with a sensor (80) and/or a material volume in a transfer conveyor detected with a sensor (92) and/or a throughput rate of the cleaning device (30) and/or a sensed cleanness of the grain in the grain tank (32) and/or an estimate, input by an operator, of the cleanness of the grain in a grain tank (32) and/or a sensed detection of the composition of the transfer.

6. Method according to Claim 5, **characterized in that** the throughput rate of the cleaning device (30) is detected on the basis of an air pressure under a screen and/or an air speed and/or an air volume flow in the cleaning device (30).

7. Method according to one of Claims 1 to 6, **characterized in that** the output of the control device (58) can be overridden by an operator.

8. Method according to one of Claims 2 to 7, **characterized in that** in an initial learning mode the control device (58) stores the determined adjustments of the screen opening size and the blower rotational speed for different slope gradients (α, β) and optionally for different values of at least one other parameter, preferably in the form of a table and/or a mathematical function derived therefrom, and in a subsequent execution mode said control device (58) calls the stored adjustments on the basis of the current slope gradient (α, β) and the other current parameter and uses them for automatic adjustment of the screen opening size and of the blower rotational speed.

9. Cleaning device (30) for a combine harvester (10), which cleaning device (30) has a blower (42) and at least one screen (40, 42, 82) which can be made to move in an oscillating fashion and has a screen opening size which can be adjusted by means of an extraneous-force-activated actuator (50, 52, 84) which is connected to a control device (58), wherein the control device (58) can be operated to determine and adjust a first screen opening size (dsetp) which is adapted for a horizontal orientation of the combine harvester (10), and to feed to the control device (58) a signal relating to the inclination angle (α, β) of a slope gradient in the forward direction (V) of the combine harvester (10), **characterized in that** the control device (58) can be operated to cause the actuator (50, 52, 84) to adjust the screen opening size automatically as it travels along a slope, in such a way that the screen opening size, protected into the horizontal, of the screen (40, 42, 84) corresponds at least approximately to the first screen opening size (dsetp).

10. Combine harvester (10) having a cleaning device (30) according to Claim 9.

## Revendications

1. Procédé de réglage d'une installation de nettoyage (30) d'une moissonneuse-batteuse (10), l'installation de nettoyage (30) présentant une soufflante (42) et au moins un tamis (40, 42, 82) pouvant être animé d'un mouvement de pivotement avec une grandeur d'ouverture de tamis pouvant être réglée par un actionneur (50, 52, 84) commandé par une force extérieure, connecté à un dispositif de commande (58), et le procédé comprenant les étapes suivantes :
détection et réglage d'une première grandeur d'ouverture de tamis (dsoll) adaptée pour une orientation horizontale de la moissonneuse-batteuse (10) ;
détection d'un angle d'inclinaison (α, β) d'une inclinaison d'une pente dans le sens de la marche avant (V) de la moissonneuse-batteuse (10) et acheminement d'un signal concernant l'angle d'inclinaison (α, β) au dispositif de commande (58) ;
**caractérisé en ce que** le dispositif de commande (58) permet à l'actionneur (50, 52, 82), lors d'un déplacement en pente, de régler la grandeur d'ouverture du tamis de telle sorte que la grandeur d'ouverture du tamis (40, 42, 82) projetée dans un plan horizontal coïncide au moins approximativement avec la première grandeur d'ouverture de tamis (dsoll).

2. Procédé selon la revendication 1, **caractérisé en ce que** le dispositif de commande (58) permet également une modification de la vitesse de rotation de la soufflante (42) en fonction de l'inclinaison de la pente (α, β).

3. Procédé selon la revendication 2, **caractérisé en ce que** le dispositif de commande (58) permet une modification de la vitesse de rotation de la soufflante (42) en fonction de la grandeur d'ouverture du tamis (40, 42, 82) en fonction de l'inclinaison de la pente de manière à ce que la vitesse de l'air au-dessus du tamis (40, 42, 82) soit indépendante de l'inclinaison de la pente (α, β).

4. Procédé selon l'une quelconque des revendications 1 à 3, **caractérisé en ce que** la commande de la grandeur d'ouverture du tamis et/ou la vitesse de rotation de la soufflante (42) sont modifiées en outre en fonction d'au moins une deuxième grandeur de mesure.

5. Procédé selon la revendication 4, **caractérisé en ce que** la deuxième grandeur de mesure est une perte de grains détectée avec un capteur (80) à l'extrémité de l'installation de nettoyage (30) et/ou un volume de matière détecté avec un capteur (92) dans un transporteur d'otons et/ou un débit de l'installation de nettoyage (30) et/ou une pureté détectée des grains dans le réservoir de grains (32) et/ou une évaluation de la pureté des grains dans un réservoir de grains (32) saisie par un opérateur et/ou une détermination détectée de la composition des otons.

6. Procédé selon la revendication 5, **caractérisé en ce que** le débit de l'installation de nettoyage (30) est détecté à l'aide d'une pression d'air sous un tamis et/ou d'une vitesse d'air et/ou d'un débit volumique d'air dans l'installation de nettoyage (30).

7. Procédé selon l'une quelconque des revendications 1 à 6, **caractérisé en ce que** les sorties du dispositif de commande (58) peuvent être neutralisées par un opérateur.

8. Procédé selon l'une quelconque des revendications 2 à 7, **caractérisé en ce que** le dispositif de commande (58) mémorise, dans un mode d'apprentissage initial, les réglages déterminés de la grandeur d'ouverture de tamis et la vitesse de rotation de la soufflante pour différentes inclinaisons de pente (α, β) éventuellement pour différentes valeurs d'au moins un autre paramètre, de préférence sous la forme d'un tableau et/ou d'une fonction mathématique déduite de celui-ci, et dans un mode de réalisation suivant, appelle les réglages mémorisés à l'aide de l'inclinaison actuelle de la pente (α, β) et de l'autre paramètre actuel et les utilise pour le réglage automatique de la grandeur d'ouverture du tamis et de la vitesse de rotation de la soufflante.

9. Installation de nettoyage (30) pour une moissonneuse-batteuse (10), qui présente une soufflante (42) et au moins un tamis (40, 42, 82) pouvant être animé d'un mouvement de pivotement avec une grandeur d'ouverture de tamis pouvant être réglée par un actionneur (50, 52, 84) commandé par une force extérieure, connecté à un dispositif de commande (58), le dispositif de commande (58) pouvant fonctionner de manière à détecter et à ajuster une première grandeur d'ouverture de tamis (dsoll) adaptée pour une orientation horizontale de la moissonneuse-batteuse (10) et un signal concernant l'angle d'inclinaison (α, β) d'une inclinaison de pente dans la direction de marche avant (V) de la moissonneuse-batteuse (10) pouvant être acheminé au dispositif de commande (58), **caractérisée en ce que** le dispositif de commande (58) peut fonctionner de manière à permettre automatiquement à l'actionneur (50, 52, 84), lors d'un déplacement en pente, de régler la grandeur d'ouverture du tamis de telle sorte que la grandeur d'ouverture du tamis (40, 42, 84), projetée dans un plan horizontal, coïncide au moins approximativement avec la première grandeur d'ouverture de tamis (dsoll).

10. Moissonneuse-batteuse (10) comprenant une installation de nettoyage (30) selon la revendication 9.
